# EUROPEAN PATENT SPECIFICATION

(11) **EP 1 911 311 B1**
(45) Date of publication and mention of the grant of the patent: **28.06.2017**
(21) Application number: 06765142.2
(22) Date of filing: 28.07.2006
(51) Int. Cl.: H04W 88/08, H04W 28/08, H04W 36/12, H04W 84/04, H04W 84/22, H04W 88/10, H04W 88/16, H04W 92/02, H04W 92/04, H04W 92/12, H04L 12/54

(54) **AUTOMATIC BASE STATION CONFIGURATION**
AUTOMATISCHE BASISSTATIONS-KONFIGURATION
CONFIGURATION DE STATION DE BASE AUTOMATIQUE

(30) Priority: 01.08.2005 GB 0515888; 30.05.2006 GB 0610650
(43) Date of publication of application: 16.04.2008
(60) Divisional application: 12173410.7
(73) Proprietor: Ubiquisys Limited, Swindon SN5 6NX (GB)
(72) Inventor: KEEVILL, Peter, Bath BA2 3NQ (GB); FRANKS, William, Pewsey, Wiltshire SN9 5LS (GB); BYRNE, Richard, Thatcham, Berkshire RG18 9HX (GB)
(74) Representative: Noble, Nicholas
(86) International application number: PCT/GB2006/002824
(87) International publication number: WO 2007/015071

(56) References cited:
- EP-A- 1 286 561
- EP-A- 1 519 613
- EP-A- 1 681 804
- EP-A1- 1 351 530
- WO-A-01/93617
- WO-A-95/08902
- WO-A-97/50274
- WO-A-2005/079087
- US-A1- 5 915 219
- US-A1- 2002 123 348
- US-A1- 2004 224 684
- "Digital cellular telecommunications system (Phase 2+)" ETSI STANDARDS, EUROPEAN TELECOMMUNICATIONS STANDARDS INSTITUTE, SOPHIA-ANTIPO, FR, vol. 3-CN1, no. V650, June 2005 (2005-06), XP014030494 ISSN: 0000-0001
- JOHANSON R ET AL: "MOBILE ADVANTAGE WIRELESS OFFICE - A DIGITAL WIRELESS OFFICE SYSTEM FOR TDMA/136 NETWORKS" ERICSSON REVIEW (INCL. ON), ERICSSON, STOCKHOLM, SE, vol. 1, 1999, pages 20-27, XP000802523 ISSN: 0014-0171

## Description

This invention relates to a cellular basestation for a wireless communications network, and in particular to a basestation for a cellular communications network, that can conveniently be used to provide a cellular service, for example within a home or office. More specifically, the invention relates to a basestation that is able to configure itself for operation within the cellular wireless communications network.

Conventional cellular wireless communications networks, for example, based on the GSM or UMTS standards, make use of a number of identifiers in the radio network, and these identifiers allow the network to be subdivided into a number of sections, normally based around geography. The purpose of the identifiers is to ease the management of the network and improve efficiency in some aspects, such as organization of paging.

For example, the document ETSI TS 123 003 - V3.4.0, section 4, "Identification of location areas and base stations" describes the use of three identifiers, namely the Location Area Identification (LAI), the Routing Area Identification (RAI), and the Service Area Identification (SAI).

Typically, many tens or hundreds of basestations share a common controller, either a Base Station Controller (BSC) in the case of GSM, or a Radio Network Controller (RNC) in the case of UMTS. These basestations would usually be included in a single Location Area and would therefore have the same LAI.

Routing Area and Service Area Identifications can each be used to subdivide a Location Area into smaller units, in order to break very large paging groups down into smaller, more manageable units.

In addition, basestations are uniquely identified by a Cell Identity (CI).

All of these parameters are specified from a centralized network control function as part of the commissioning process for the cellular radio network, and are typically static, or at least are changed very infrequently.

The present invention relates primarily to a small basestation that is located on a customer's premises, and can be put into service by the customer as he wishes. In such a situation, it is potentially very time-consuming for the network operator to have to configure the Identifications for each such basestation.

EP-1351530 A1 discloses a home base station, in which a group of nearby home base stations are connected to a single home base station controller, and are assigned to a single location area.

According to a first aspect of the present invention, there is provided a method of allocating a Location Area Identification to a basestation in a cellular wireless communications network, the method being characterised by, in the basestation itself: (a) monitoring Broadcast Channel transmissions from surrounding basestations of the network to deduce which Location Area Identifications are in use by the surrounding basestations of said network; and (b) configuring the basestation such that it has a different Location Area Identification from the surrounding basestations of said network whose transmissions are monitored.

According to a second aspect of the present invention, there is provided a basestation, for use in a cellular wireless communications network, wherein the basestation is adapted to monitor Broadcast Channel transmissions from surrounding basestations of the network to deduce which Location Area Identifications are in use by the surrounding basestations of said network; and to configure itself such that it has a different Location Area Identification from the surrounding local basestations of said network whose transmissions are monitored.

For a better understanding of the present invention, and to show how it may be put into effect, reference will now be made, by way of example, to the accompanying drawings, in which:
Figure 1 is a block schematic diagram of a system incorporating a basestation in accordance with the present invention.
Figure 2 is a flow chart, illustrating a first procedure in accordance with the invention.
Figure 3 is a flow chart, illustrating a second procedure in accordance with the invention.

### DETAILED DESCRIPTION OF PREFERRED EMBODIMENTS

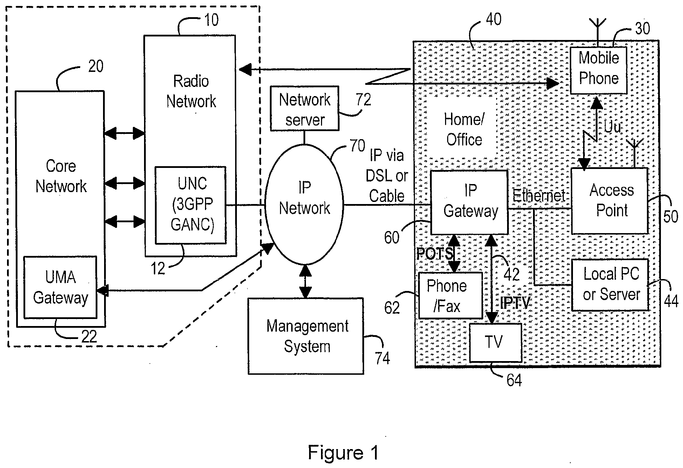

Figure 1 is a block schematic diagram, illustrating a system architecture. A mobile network operator (MNO) owns and operates a wireless communications network, including a radio access network 10, including a network of cellular basestations (not shown), and a core network 20, having a connection into the fixed telephone network. These are generally conventional, except as described below.

A mobile phone 30, when roaming in the territory covered by the wireless communications network, is able to establish a wireless connection with one of the cellular basestations, in order to communicate with other telephones in the fixed telephone network, or with other mobile phones, which have established their own wireless connections with a cellular basestation, and hence with the fixed telephone network.

In accordance with the present invention, there is provided, for example within a home or office 40 or in another location where additional wireless coverage is required, a further basestation, or access point, 50. This access point 50 is provided for use by the owner of the premises where it is located, but is integrated into the wireless communications network. That is, the access point shares the part of the radio frequency spectrum allocated to that wireless communications network, by having allocated to it, either permanently or temporarily, some of the group of channels. This group of channels is thus shared with other basestations, which may serve macrocells, microcells, picocells, or even "femtocells", in the public, wide area network. As a result, the mobile phone 30 can roam from the access point 50 to another basestation when leaving the immediate vicinity of the access point 50, or can roam to the access point 50 from another basestation when returning to the immediate vicinity of the access point 50.

The access point 50 therefore acts as a basestation within the relevant wireless communications network. For example, it can allow an entirely conventional and unmodified mobile phone 30 or other user device to establish a connection for voice and/or data services using GSM/GPRS and/or UMTS air interfaces. Of course, the access point 50 can be enabled to establish connections with the mobile phone 30 using the standard air interface of any suitable cellular wireless communications system.

The access point 50 has a connection for an Ethernet Local Area Network (LAN) 42, within the home or office 40. As shown in Figure 1, the access point 50 can connect over the Ethernet LAN 42 to one or more local PCs or servers 44.

The access point 50 can connect over the Ethernet LAN 42 to an IP gateway device 60. The IP gateway device 60 provides an IP connection over an IP network 70, for example the internet, to the MNO network either via a Digital Subscriber Line (DSL) or via other IP transport methods such as a digital multimedia Cable network. Thus, the existing IP connection from the home or office can be used to provide backhaul from the access point 50. Flexible interfacing to the operator's network 20 can be provided via connections to either the MNO Core Network or Radio Access Network, using the SIP Gateway or UMA UNC respectively. This approach enables low-cost transport of data and voice using Voice-over-Internet Protocol (VoIP) techniques.

The connection from the IP gateway 60 over the IP network 70 into the MNO Radio Access Network 10 is provided by a UMA Unlicensed Network Controller (UNC) 12, which has been standardised by 3GPP as a Generic Access Network Controller (GANC). Other non-standardised solutions to interface to the Radio Access Network 10 could also be employed as an alternative approach. Direct connection to the operator's Core Network can be achieved through use of a SIP Interface between the access point and a suitable gateway such as a SIP Gateway or an IP Multimedia Subsystem.

In this illustrated embodiment, the DSL or cable IP gateway device 60 includes provision for connection of a POTS telephone or fax device 62, and audio/video connections for providing IPTV services to a TV 64. The access point 50 includes a services environment which allows these facilities to be integrated into the MNO network, enabling sophisticated new services for users.

In an alternative implementation of the invention, the access point 50 can be integrated as a component within the IP gateway device 60; an internal IP connection then links the embedded access point component to the router functions within the IP gateway device. This configuration can potentially provide a lower overall cost and is convenient for operators looking to provide gateway units which unify data, fixed voice, multimedia and mobile services.

Thus, while the mobile phone 30 is within the home or office 40, or otherwise within the coverage area of the access point 50, it can connect into the MNO network in the same way as via any other basestation in the cellular wireless communications network.

Figure 1 also shows a network server 72 connected to the IP network 70. As will be appreciated, where the IP network 70 is the internet, a very large number of servers and other devices are connected to the network. As will be described in more detail below, the user of the mobile phone 30 can access such devices by means of the access point 50.

Figure 1 also shows a management system 74, connected to the IP network 70. The management system 74 is provided by the mobile network operator for managing the operation of the access point 50, including controlling the available services.

For example, as mentioned above, and as described in more detail below, a user of the mobile phone 30 can establish a connection through the access point 50 over the Ethernet LAN 42 to one or more local PCs or servers 44, or through the IP gateway device 60 to another device connected thereto, or through the IP gateway device 60 to a network server 72 connected to the IP network 70. These connections can be established without passing traffic over the core network 20 of the wireless communications network. The management system 74 is able to define the devices, or the IP addresses, with which such connections can be established. Then, these connections can be established with only a restricted number of devices or IP addresses, if desired by the mobile network operator.

Also, the management system 74 is able to specify a set of channels (which may be defined by frequencies, time slots, and/or spreading codes, depending on the particular cellular wireless communications system) allocated for the access point 50 to use. These channels may be allocated semi-permanently, or may be changed regularly, depending on the requirements of the network as a whole. The access point will select an optimal channel configuration for use, from the set specified by the management system.

In normal macrocell operation, a UE, such as the mobile phone 30, registers onto a cell by means of a Location Registration (LR) if the selected or reselected cell has a different Location Area or PLMN (Public Land Mobile Network) identity. In the case of cells with a common Location Area Identifier, the UE can simply camp on to any cell with the common LAI without giving any indication to the network that it has done so.

The network configuration for the access point 50 is somewhat different from a conventional radio network. For example, the access point 50 includes BSC/RNC functionality, and may be independent of any other radio network control function. As a result, the typical use of Location Area Identifications (LAIs) and Routing Area Identifications (RAIs) does not apply.

Furthermore the access point 50 requires the mobile phone 30 to identify itself as it roams in from the macrocell network. Identifying the access point 50 with a LAI which is different from the overlying macro layer (and from any other local access point) triggers a Location Update Procedure in the mobile phone 30, which automatically informs the mobile phone 30 and the network that it has moved to coverage by the access point 50.

Therefore, the access point 50 will configure itself to have a different Location Area (and therefore Routing Area) to the macro-network, so that a Location Registration procedure will always be necessary. An IMSI Attach may also be performed during the Location Registration procedure.

It is envisaged that the network may include a relatively large number of access points such as the access point 50, and moreover that the distribution of active access points may change relatively frequently. Thus, configuring the access point LAIs from a central control scheme would be time-consuming.

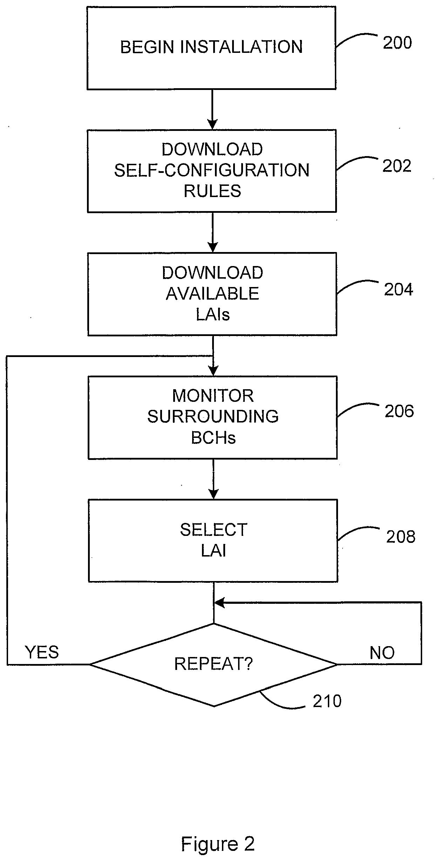

The access point 50 therefore uses an automatic self-configuration scheme. Figure 2 is a flow chart, illustrating this automatic self-configuration scheme.

At step 200, the access point 50 starts its installation procedure, for example when first powered up. In one embodiment, the rules for the self-configuration are specified centrally in the management system 74, and are downloaded to the access point 50 at step 202 during installation.

In one embodiment, the Mobile Network Operator reserves a group of LAIs for use by access points such as the access point 50. The Location Area Code (LAC) of the Location Area Identification (LAI), as defined in the document ETSI TS 123 003 - V3.4.0, section 4.1, has 16 bits, and thus there are about 65,000, 2¹⁶, possible identifiers. A typical conventional network might use less than 1000 of these. Thus, in accordance with this embodiment of the invention, the Mobile Network Operator reserves a list of LAIs for use by access points such as the access point 50. This list may for example include 100-10,000 LAIs.

At step 204, this list of available LAIs is downloaded to the access point 50.

As part of the general installation procedure, the access point 50 performs an RF scan process. During this process, at step 206 of the procedure shown in Figure 2, the access point 50 monitors the Broadcast Channel (BCH) of transmissions from surrounding Node-B's and access points in accordance with the present invention. The LAI and RAI information is included in the BCH transmission, and so the installing access point 50 will be able to deduce which of LAIs from the list of available LAIs have been taken by surrounding access points.

Then, in step 208, the access point 50 selects its own LAI using a random choice of the remaining available LAIs.

The key issue is that the LAIs for all of the access points observed from any single mobile are unique. Depending on the transmit power of the access points, amongst other things, this may mean all of the access points in a radius of less than 200m. It is acceptable for more distant access points to repeat LAIs.

The access point 50 can then enter service, using the selected LAI.

At step 210, it is determined whether to repeat the selection procedure. The procedure may be repeated at each installation and at each power-up, but, in a typical case, the automatically configured LAI will be retained unless there is a significant change in the surrounding cell environment such as a relocation of the access point itself.

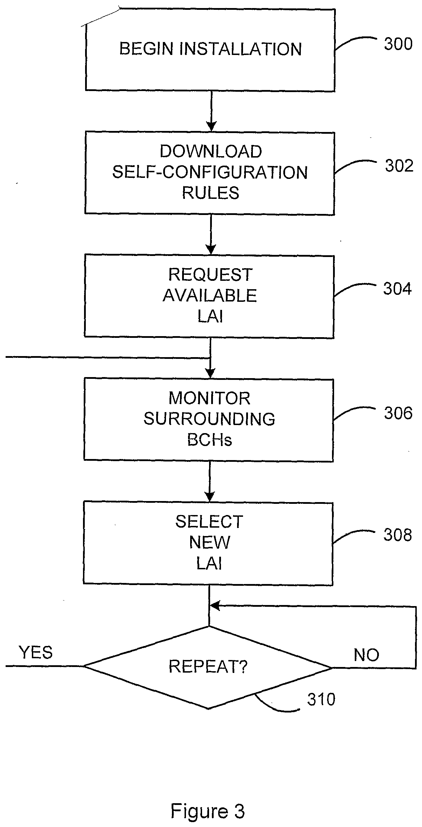

Figure 3 is a flow chart, illustrating an alternative automatic self-configuration scheme in accordance with an embodiment of the invention.

At step 300, the access point 50 starts its installation procedure, for example when first powered up. In one embodiment, the rules for the self-configuration are specified centrally in the management system 74, and are downloaded to the access point 50 at step 302 during installation.

In this embodiment, the Mobile Network Operator reserves a group of LAIs for use by access points such as the access point 50. The Location Area Code (LAC) of the Location Area Identification (LAI), as defined in the document ETSI TS 123 003 - V3.4.0, section 4.1, has 16 bits, and thus there are about 65,000, 2¹⁶, possible identifiers. A typical conventional network might use less than 1000 of these. Thus, in accordance with this embodiment of the invention, the Mobile Network Operator reserves a list of LAIs for use by access points such as the access point 50. This list may for example include about 10,000 LAIs.

At step 304, the access point 50 sends a message to the management system 74, requesting a LAI from the list of available LAIs. The management system 74 responds with an LAI that is available for use by the access point 50.

In order to assist with this, it may be required that each new access point customer should record their address details, and these could be recorded in the management system 74. By using these address details, for example using post code information in the UK, the management system 74 can make an initial allocation of an LAI identifier to each new customer that is highly probable to be unique within that particular locality.

The access point may confirm, by observation of information transmitted by surrounding access points on their respective broadcast channels, that the received LAI is not in use in any observable local access points. If the received LAI is not found to be in use in any observable local access points, that LAI can be configured; if the access point detects another local access point with the same LAI, it can request the management system for another LAI.

The access point 50 can then enter service, using the selected LAI. Since the list of available LAIs contains so many LAIs, there is only a low probability that two local access points will select the same LAI. In that event, the collision may be corrected by later observation.

Thus, when the access point 50 performs an RF scan process, at step 306 of the procedure shown in Figure 3, the access point 50 monitors the Broadcast Channel (BCH) of transmissions from surrounding Node-B's and access points in accordance with the present invention. The LAI and RAI information is included in the BCH transmission, and so the installing access point 50 will be able to deduce whether its own LAI is shared with the any of the surrounding access points.

If so, in step 308, the access point 50 selects a new LAI, for example by requesting a new LAI from the management system 74, as described above.

Thus, it is possible to ensure that, for almost all mobiles and for almost all of the time, the LAIs for all of the access points observed from any single mobile are unique. In any event, it will be noted that the access point 50 can be connected directly to the core network using a network interfacing scheme, such as via SIP or IMS, in which the LAI identifiers are not required for locating users and routing paging messages. Rather, IP address information is recorded and used instead. Thus, it would be permissible in these scenarios for the access point 50 to reselect its LAI at power-up or during the next scheduled RF scan, if it detected a common LAI used by another local access point.

At step 310, it is determined whether to repeat the selection procedure. The procedure may be repeated at each installation and at each power-up but, as noted above with reference to step 210, it is most likely to remain static until a major change in the surrounding cellular environment is observed.

Thus, there are described methods for selecting a new LAI in the access point 50. It will be noted that the LAI simply has to be different from that of the surrounding cells in order to force the Location Update. It is not necessary for the LAI to remain static. Moreover, when a LAI is allocated to the access point, a new RAI is also allocated.

The use of distinct LAI identifiers has benefits in scenarios where the access to the access point 50 is to be restricted to specific users. That is, the access point 50 can be configured such that only certain specified devices (UEs) are allowed to connect to the network through that access point. Typically, an access point on the premises of a particular customer will be configured such that only the specified devices (UEs) owned by that customer are allowed to connect to the network through that access point. That is, only those UEs whose IMSIs are defined within the management system and subsequently downloaded to the access point, are allowed to camp on that access point.

The access point 50 may carry the PLMN identifier of the MNO macro network (which will typically be specified as the Home PLMN in the SIM card of the UE(s) of the relevant customer), or it may be identified by a PLMN which is different to the macro network but is defined as an "Equivalent PLMN" within the macro network. In the case where the access point 50 has the same PLMN as the macro network or an Equivalent PLMN to the macro network, any macro network UE will camp onto the access point if it determines it to be the strongest signal. In the case of an access point 50 configured such that only certain specified devices (UEs) are allowed to connect to the network through that access point, the access point will respond to a non-specified device camping on by issuing a standard GSM/UMTS rejection message to cause the offending UE to reselect another cell, typically the macro cell it has just roamed out of.

If the offending UE camps back onto the access point cell within a few minutes of this rejection, the access point can use an alternative rejection message "Location Area Not Allowed" which causes the LAI identifier of the specific access point to be added to a list of banned cells maintained by the UE. Once the LAI is included in the banned list, the UE will not attempt to camp on again. The banned list is maintained until the UE is turned off or reset.

In this situation, it is advantageous if the LAI of the access point is not used in any other access point.

On the other hand, if the number of LAIs allocated to access points such as the access point 50 is very much smaller than the number of access points, there exists a risk that the LAI in the banned list of the offending UE might also be the LAI of a different access point cell that the user may legitimately access. In this scenario, the access point 50 may, before using the "Location Area Not Allowed" rejection message, request the management system to cross check that the offending IMSI is not associated with an access point, or, if it is, that the LAI from which the user is about to be banned is not the same as the LAI(s) associated with the access point(s) that the user is allowed to access.

As mentioned above, a typical conventional network may use only a relatively small number (for example less than 100, or even less than 100) of the available LAIs, even when the network is large. In that case, it may present some complications for the MNO if a large set of LAI/RAI identifiers is available for use by access points such as the access point 50.

If so, this set of LAI/RAI identifiers can be collapsed into a smaller set. This may be done in a centralised location or through a translation mapping operation within the access point itself. The access point includes a sophisticated protocol stack which includes Non-Access Stratum functions typically found in the circuit and packet core of a mobile network. The access point can use these functions to terminate mobility management (MM) and GPRS mobility management (GMM) signalling from the UE. Optionally, the access point can intercept these messages and modify them before passing them on to the MNO network. Thus, the LAI/RAI identifiers included in the messages received from the UE (and derived from the LAI/RAI identifier transmitted by the access point over the GSM/UMTS air interface) can be replaced in messages passed onto the MNO network by an alternative LAI/RAI identifier to suit the convenience of the operator.

For example, even though several thousand LAI's may be used by all of those access points such as the access point 50 in the network, there could be a much smaller number (for example only three) of LAIs which are carried in signalling exchanges from the UEs to the core network. As an example, one LAI could be used for access point users within their own premises, one could be used for nominated guests of access point users, and one could be used for other users who have roamed onto access points which have capacity available for non-authorised users. The three LAIs in this example might be used to convey tariff information to the MNO network billing system.

There is thus described a system in which a basestation is configured such that it has a different Location Area Identification from other local basestations in the cellular network.

## Claims

1. A method of allocating a Location Area Identification to a basestation in a cellular wireless communications network, the method being **characterised by**,
in the basestation itself:
(a) monitoring Broadcast Channel transmissions from surrounding basestations of the network (206, 306) to deduce which Location Area Identifications are in use by the surrounding basestations of said network; and
(b) configuring the basestation (208, 308) such that it has a different Location Area Identification from the surrounding basestations of said network whose transmissions are monitored.

2. A method as claimed in claim 1, comprising:
requesting a list of available Location Area Identifications from a management node of the network (204); and
selecting a Location Area Identification from said list (208), wherein the selected Location Area Identification differs from Location Area Identifications in the monitored transmissions.

3. A method as claimed in claim 1, comprising:
requesting a new Location Area Identification from a management node of the network (304); and
applying a Location Area Identification supplied by the management node (308) only if the Location Area Identification supplied by the management node differs from Location Area Identifications in the monitored transmissions.

4. A method as claimed in claim 1, further comprising:
including in radio transmissions from said basestation a first Location Area Identification configured such that it is different from the Location Area Identifications of other local basestations of said network, said first Location Area Identification being selected from a first set of Location Area Identifications; and
including a second Location Area Identification in messages sent to a core network of said cellular communications network, said second Location Area Identification being selected from a second set of Location Area Identifications.

5. A method as claimed in claim 4, comprising including said first Location Area Identification in all radio transmissions from said basestation.

6. A method as claimed in claim 4, wherein the second Location Area Identification included in a message sent to a core network of said cellular communications network is selected from said second set of Location Area Identifications based on an identity of a mobile device communicating with said basestation.

7. A method as claimed in claim 4, wherein the first set of Location Area Identifications and the second set of Location Area Identifications are mutually exclusive.

8. A method as claimed in claim 4, wherein the first set of Location Area Identifications comprises more than 100 Location Area Identifications.

9. A method as claimed in claim 4, wherein the second set of Location Area Identifications comprises less than 10 Location Area Identifications.

10. A basestation, for use in a cellular wireless communications network, **characterised in that** the basestation is adapted to monitor Broadcast Channel transmissions from surrounding basestations of the network to deduce which Location Area Identifications are in use by the surrounding basestations of said network; and to configure itself such that it has a different Location Area Identification from the surrounding local basestations of said network whose transmissions are monitored.

11. A basestation as claimed in claim 10, wherein the basestation is adapted to request a list of available Location Area Identifications from a management node of the network; and to select from said list a Location Area Identification that differs from Location Area Identifications in the monitored transmissions.

12. A basestation as claimed in claim 10, wherein the basestation is adapted to request a new Location Area Identification from a management node of the network; and to apply a Location Area Identification supplied by the management node only if the Location Area Identification supplied by the management node differs from Location Area Identifications in the monitored transmissions.

13. A basestation as claimed in claim 10, for a cellular communications network,
wherein the basestation identifies itself in radio transmissions therefrom by means of a first Location Area Identification configured such that it is different from other local basestations of said network, and
wherein the basestation includes a second Location Area Identification in messages sent to a core network of said cellular communications network, said second Location Area Identification being selected based on an identity of a mobile device communicating with said basestation.

## Patentansprüche

1. Verfahren zum Zuweisen einer Aufenthaltsbereichsidentifikation (Location Area Identification) an eine Basisstation in einem drahtlosen Funkkommunikationsnetz, wobei das Verfahren **gekennzeichnet ist durch**,
in der Basisstation selbst:
(a) Überwachen von Übertragungen eines Sendekanals von umliegenden Basisstationen des Netzes (206, 306) zum Ableiten, welche Aufenthaltsbereichsidentifikationen durch die umliegenden Basisstationen des Netzes im Gebrauch sind; und
(b) Konfigurieren der Basisstation (208, 308), sodass sie eine unterschiedliche Aufenthaltsbereichsidentifikation als die umliegenden Basisstationen des Netzes hat, deren Übertragungen überwacht werden.

2. Verfahren nach Anspruch 1, aufweisend:
Anfordern einer Liste verfügbarer Aufenthaltsbereichsidentifikationen von einem Verwaltungsknoten des Netzes (204); und
Auswählen einer Aufenthaltsbereichsidentifikation aus der Liste (208), wobei sich die ausgewählte Aufenthaltsbereichsidentifikation von Aufenthaltsbereichsidentifikationen in den überwachten Übertragungen unterscheidet.

3. Verfahren nach Anspruch 1, aufweisend:
Anfordern einer neuen Aufenthaltsbereichsidentifikation von einem Verwaltungsknoten des Netzes (304); und
Anwenden einer vom Verwaltungsknoten (308) zugestellten Aufenthaltsbereichsidentifikation nur dann, wenn sich die vom Verwaltungsknoten zugestellte Aufenthaltsbereichsidentifikation von Aufenthaltsbereichsidentifikationen in den überwachten Übertragungen unterscheidet.

4. Verfahren nach Anspruch 1, ferner aufweisend:
Inkludieren, in Funkübertragungen von der Basisstation, einer ersten Aufenthaltsbereichsidentifikation, die derart konfiguriert ist, dass sie von den Aufenthaltsbereichsidentifikationen anderer lokaler Basisstationen des Netzes unterschiedlich ist, wobei die erste Aufenthaltsbereichsidentifikation aus einem ersten Satz von Aufenthaltsbereichsidentifikationen ausgewählt ist; und
Inkludieren einer zweiten Aufenthaltsbereichsidentifikation in Nachrichten, die an ein Kernnetz des Funkkommunikationsnetzes gesendet werden, wobei die zweite Aufenthaltsbereichsidentifikation aus einem zweiten Satz von Aufenthaltsbereichsidentifikationen ausgewählt ist.

5. Verfahren nach Anspruch 4, aufweisend ein Inkludieren der ersten Aufenthaltsbereichsidentifikation in alle Funkübertragungen von der Basisstation.

6. Verfahren nach Anspruch 4, wobei die zweite Aufenthaltsbereichsidentifikation, die in einer an ein Kernnetz des Funkkommunikationsnetzes gesendeten Nachricht inkludiert ist, aus dem zweiten Satz von Aufenthaltsbereichsidentifikationen ausgewählt ist, der auf einer Identität eines Mobilgeräts basiert, das mit der Basisstation kommuniziert.

7. Verfahren nach Anspruch 4, wobei der erste Satz von Aufenthaltsbereichsidentifikationen und der zweite Satz von Aufenthaltsbereichsidentifikationen sich gegenseitig ausschließen.

8. Verfahren nach Anspruch 4, wobei der erste Satz von Aufenthaltsbereichsidentifikationen mehr als 100 Aufenthaltsbereichsidentifikationen aufweist.

9. Verfahren nach Anspruch 4, wobei der zweite Satz von Aufenthaltsbereichsidentifikationen weniger als 10 Aufenthaltsbereichsidentifikationen aufweist.

10. Basisstation für die Verwendung in einem drahtlosen Funkkommunikationsnetz, **dadurch gekennzeichnet, dass** die Basisstation ausgelegt ist, Übertragungen eines Sendekanals von umliegenden Basisstationen des Netzes zu überwachen, um abzuleiten, welche Aufenthaltsbereichsidentifikationen durch die umliegenden Basisstationen des Netzes im Gebrauch sind; und sich selbst zu konfigurieren, sodass sie eine unterschiedliche Aufenthaltsbereichsidentifikation als die umliegenden Basisstationen des Netzes hat, deren Übertragungen überwacht werden.

11. Basisstation nach Anspruch 10, wobei die Basisstation ausgelegt ist, eine Liste verfügbarer Aufenthaltsbereichsidentifikationen von einem Verwaltungsknoten des Netzes anzufordern; und aus der Liste eine Aufenthaltsbereichsidentifikation auszuwählen, die sich von Aufenthaltsbereichsidentifikationen in den überwachten Übertragungen unterscheidet.

12. Basisstation nach Anspruch 10, wobei die Basisstation ausgelegt ist, eine neue Aufenthaltsbereichsidentifikation von einem Verwaltungsknoten des Netzes anzufordern; und eine vom Verwaltungsknoten zugestellte Aufenthaltsbereichsidentifikation nur anzuwenden, wenn sich die vom Verwaltungsknoten zugestellte Aufenthaltsbereichsidentifikation von Aufenthaltsbereichsidentifikationen in den überwachten Übertragungen unterscheidet.

13. Basisstation nach Anspruch 10, für ein Funkkommunikationsnetz,
wobei die Basisstation sich selbst in Funkübertragungen davon durch eine erste Aufenthaltsbereichsidentifikation identifiziert, die derart konfiguriert ist, dass sie von anderen lokalen Basisstationen des Netzes unterschiedlich ist; und
wobei die Basisstation eine zweite Aufenthaltsbereichsidentifikation in Nachrichten inkludiert, die an ein Kernnetz des Funkkommunikationsnetzes gesendet werden, wobei die zweite Aufenthaltsbereichsidentifikation basierend auf einer Identität eines Mobilgeräts, das mit der Basisstation kommuniziert, ausgewählt ist.

## Revendications

1. Un procédé d'attribution d'une identification de zone de localisation à une station de base dans un réseau de communications cellulaire sans fil, le procédé étant **caractérisé par**, dans la station de base elle-même :
(a) la surveillance des transmissions de canal de diffusion en provenance des stations de base environnantes du réseau (206, 306) afin de déduire quelles identifications de zone de localisation sont en utilisation par les stations de base environnantes dudit réseau, et
(b) la configuration de la station de base (208, 308) de telle sorte qu'elle possède une identification de zone de localisation différente des stations de base environnantes dudit réseau dont les transmissions sont surveillées.

2. Un procédé tel que revendiqué dans la revendication 1, comprenant :
la demande d'une liste d'identifications de zone de localisation disponibles à partir d'un noeud de gestion du réseau (204) ; et
la sélection d'une identification de zone de localisation à partir de ladite liste (208), dans laquelle l'identification de zone de localisation sélectionnée diffère des identifications de zone de localisation dans les transmissions surveillées.

3. Un procédé tel que revendiqué dans la revendication 1, comprenant :
la demande d'une nouvelle identification de zone de localisation à partir d'un noeud de gestion du réseau (304); et
l'application de l'identification de zone de localisation fournie par le noeud de gestion (308) uniquement si l'identification de zone de localisation fournie par le noeud de gestion diffère des identifications de zone de localisation dans les transmissions surveillées.

4. Un procédé tel que revendiqué dans la revendication 1, comprenant en outre :
l'inclusion, dans les transmissions radio émanant de ladite station de base, d'une première identification de zone de localisation configurée de telle manière qu'elle soit différente des identifications de zone de localisation des autres stations de base locale dudit réseau, ladite première identification de zone de localisation étant choisie à partir d'une première série d' identifications de zone de localisation ; et
l'inclusion d'une seconde identification de zone de localisation dans des messages envoyés à un noeud central dudit réseau de communications cellulaires, ladite seconde identification de zone de localisation étant choisie à partir d'une seconde série d' identifications de zone de localisation.

5. Un procédé tel que revendiqué dans la revendication 4, comprenant l'inclusion de ladite première identification de zone de localisation dans toutes les transmissions radio émanant de ladite station de base.

6. Un procédé tel que revendiqué dans la revendication 4, dans lequel la deuxième identification de zone de localisation incluse dans un message envoyé à un réseau central dudit réseau de communication cellulaire est sélectionnée à partir de ladite seconde série d'identifications de zone de localisation sur la base d'une identité d'un dispositif mobile communiquant avec ladite station de base.

7. Un procédé tel que revendiqué dans la revendication 4, dans lequel la première série d'identifications de zone de localisation et la deuxième série d'identifications de zone de localisation sont mutuellement exclusives.

8. Un procédé tel que revendiqué la revendication 4, dans lequel la première série d'identifications de zone de localisation comprend plus de 100 identifications de zone de localisation.

9. Procédé tel que revendiqué la revendication 4, dans lequel la deuxième série d'identifications de zone de localisation comprend moins de 10 identifications de zone de localisation.

10. Une station de base, destinée à être utilisée dans un réseau de communications cellulaire sans fil, **caractérisée en ce que** la station de base est adaptée afin de surveiller des transmissions de canal de diffusion en provenance des stations de base environnantes du réseau afin de déduire quelles identifications de zone de localisation sont en cours d'utilisation par les stations de base environnantes dudit réseau ; et afin de se configurer de telle sorte qu'elle ait une identification de zone de localisation différente des stations de base environnantes dudit réseau dont les transmissions sont surveillées.

11. Une station de base telle que revendiquée dans la revendication 10, dans laquelle la station de base est adaptée afin de demander une liste d'identifications de zone de localisation disponibles à partir d'un noeud de gestion du réseau; et afin de sélectionner, à partir de ladite liste, une identification de zone de localisation qui soit différente des d'identifications de zone de localisation dans les transmissions surveillées.

12. Une station de base telle que revendiquée dans la revendication 10, dans laquelle la station de base est adaptée afin de demander une nouvelle identification de zone de localisation à partir d'un noeud de gestion du réseau; et pour appliquer une identification de zone de localisation fournie par le noeud de gestion uniquement si l'identification de zone de localisation fournie par le noeud de gestion est différente des identifications de zone de localisation dans les transmissions surveillées.

13. Une station de base telle que revendiquée dans la revendication 10, destinée à un réseau de communications cellulaire sans fil, dans laquelle la station de base s'identifie elle-même dans des transmissions en provenant au moyen d'une première identification de zone de localisation configurée de telle sorte qu'elle soit différente des autres stations de base dudit réseau, et
dans laquelle la station de base inclut une seconde identification de zone de localisation dans des messages envoyés à un noeud central dudit réseau de communications cellulaires , ladite seconde identification de zone de localisation étant choisie sur la base d'une identité d'un dispositif mobile communiquant avec ladite station de base.
